# EUROPEAN PATENT SPECIFICATION

(11) **EP 3 706 552 B1**
(45) Date of publication and mention of the grant of the patent: **26.01.2022**
(21) Application number: 18827141.5
(22) Date of filing: 06.11.2018
(51) Int. Cl.: A01G 23/08, E02F 3/96, E02F 9/22, F15B 1/033

(54) **HYDRAULIC SYSTEM FOR A MULTI-PROCESS MACHINE AND A MULTI-PROCESS MACHINE USING IT**
HYDRAULIKSYSTEM FÜR EINE MULTIPROZESS-MASCHINE UND DIE MULTIPROZESSMASCHINE MIT IHM
SYSTÈME HYDRAULIQUE POUR UNE MACHINE À PLUSIEURS PROCESSUS ET MACHINE À PLUSIEURS PROCESSUS L'UTILISANT

(30) Priority: 06.11.2017 FI 20175989
(43) Date of publication of application: 16.09.2020
(73) Proprietor: Ketonen, Lauri, 64100 Kristiinankaupunki (FI)
(72) Inventor: Ketonen, Lauri, 64100 Kristiinankaupunki (FI)
(74) Representative: Kespat Oy
(86) International application number: PCT/FI2018/050813
(87) International publication number: WO 2019/086769

(56) References cited:
- WO-A1-2009/144524
- WO-A1-2014/191628
- US-A- 3 880 216

## Description

The invention is related to a hydraulic system for a multi-process machine of the type mentioned in the preamble of Claim 1 and a multi-process machine using it.

A conventional multi-process machine includes a base machine, a boom assembly comprising at least one boom and a felling head for felling and further processing of trees. The felling head is arranged to be suspended on said boom via a joint, said felling head including:
- a rotator for rotating a harvester,
- a suspension device, an actuator unit and its frame including a log feeding device complete with its hydraulic motors, and wherein
- the hydraulic system comprises
- a hydraulic pump on the base machine,
- a hydraulic pressure line and a return line led from the base machine to the control valve of the felling head,
- at least one said hydraulic motor for driving the feeding device
- a supply line and return lines for the motor, controlled by a control valve, and
- at least one pressure accumulator located in the system for increasing the instantaneous output with said motor.

Several base machines exist for felling heads, for example, excavators are commonly used. In many cases, the stability of the base machine and the usability of the boom would be sufficient, but the motor output is still inadequate. This leads to being forced to select an oversized base machine.

Since large series production machines are concerned compared to traditional felling head base machines, their prices, e.g., those of excavators, are still affordable although the base is oversized. In many cases, as the base size increases, transportation of the base to the work site requires an excessive transport chassis. Such a situation occurs when new work sites are opened up in mountain forests. Further, as harvesting proceeds, new road routes are opened up on slopes. Then the chassis of the harvester cannot be too heavy either.

Generally, it is possible to use the term 'multi-process machine', which fells, delimbs and cuts trees. In addition, the felling head forms a loader for log processing. The term 'harvester' is also used.

When new work sites are opened up, the tree stand is generally variable including small and large trees. So far, it has been customary to use so-called pulse harvesters on small harvester bases. These can be temporarily used to process oversized trees; however, in a normal forest, these pulse harvesters are slow.

WO 2009/144524 A1 and US 3 880 216 A illustrate examples of such multi-process machines.

The object of the invention is to increase the speed particularly of a roller- or track-driven felling head. Knowing that the delimbing force is very dependent on the speed, achieving even the square of speed, the simplest way to improve delimbing is to increase speed. In practice, an excavator weighing approximately 9,000 kg enables a delimbing speed of 2.5 m/s. This dimensioning has become standard over the years. Since logs approximately 5 metres long are very often processed, the work cycle of feeding and cutting generates a suitable rhythm for the utilisation of pressure accumulators.

The objects of the invention are achieved with the means described in Claim 1.

A pressure accumulator is efficiently used pulse-operated its use mainly comprising sawing and log feeding including their auxiliary steps. A key factor when using a pressure accumulator battery is to use it only for improving log feeding and to provide a direct supply line from the accumulator battery to the log feeding motor. It is also advantageous to correspondingly use a direct charging line from the pump to the accumulator battery.

Additional energy necessary for log feeding is partly obtained during deceleration of feeding; when sawing is resumed, part of the energy can be stored in the accumulator. During the actual sawing operation, however, all possible energy is needed for the saw motor. However, when sawing ends and the flange returns to the saw chamber, the accumulator can be recharged again. Furthermore, before starting a new feeding operation, delays will still appear due to security protections during which the accumulator can be recharged. In practical work, it has been possible to reach results where a feed speed of approximately 4.6 m/s can be obtained when processing 5 metres long logs in normal operation. When now comparing to operation without additional oil (speed 2.5 m/s), kinetic energy will multiply by ~3.4. This is of a particular importance, when trees must be delimbed. The delimbing force has been a clear bottleneck as the machine output decreases with smaller machines.

Said pressure accumulator is advantageously located on the base machine. Alternatively, generally in exceptional cases, said pressure accumulator is located on the boom assembly.

Very smooth operation is achieved when said pressure accumulators are at least two (most preferably 3 - 6), each arranged with a different pre-charge pressure.

The average pre-charge pressure of pressure accumulators is preferably 40% - 60%, most preferably 45% - 55% of the work pressure, and the pre-charge pressure range of pressure accumulators is 8% - 16%, most preferably 10% - 14% of the work pressure.

Generally, said second auxiliary supply line is connected to the side that drives the hydraulic motor in the forward direction.

Said control valve of the first auxiliary supply line is a so-called variable flow control valve or proportional valve for charging the pressure accumulator with selected output, since partial output is possible in several steps. Thus, the hydraulic system of the multi-process machine includes logic control for controlling the proportional control valve with partial output in selected cycles.

The output of the chainsaw motor is preferably 70% - 100% of the output of the hydraulic motors for the feeding device without the additional output provided by the accumulator battery.

The base machine can be an excavator weighing 7 - 10 tons and the motor output can be as low as approximately 50 kW (generally 40 kW - 55 kW) while still achieving a feed speed of almost 5 m/s. The motor output of the base machine is preferably 80% - 120% of the rated output of the feed motors, i.e., without the use of the accumulator battery.

The invention is described below with examples and by making reference to the appended drawings that illustrate a suspension device according to the invention in a multi-process machine.
- Figure 1: depicts a small multi-process machine in the context of a small excavator.
- Figure 2: depicts the entity of a hydraulic system for a multi-process machine.
- Figure 3: depicts a central hydraulic system in more detail.
- Figures 4a and 4b: depict a pressure accumulator battery and its encasing system.
- Figure 5: depicts a valve block for controlling a pressure accumulator battery.

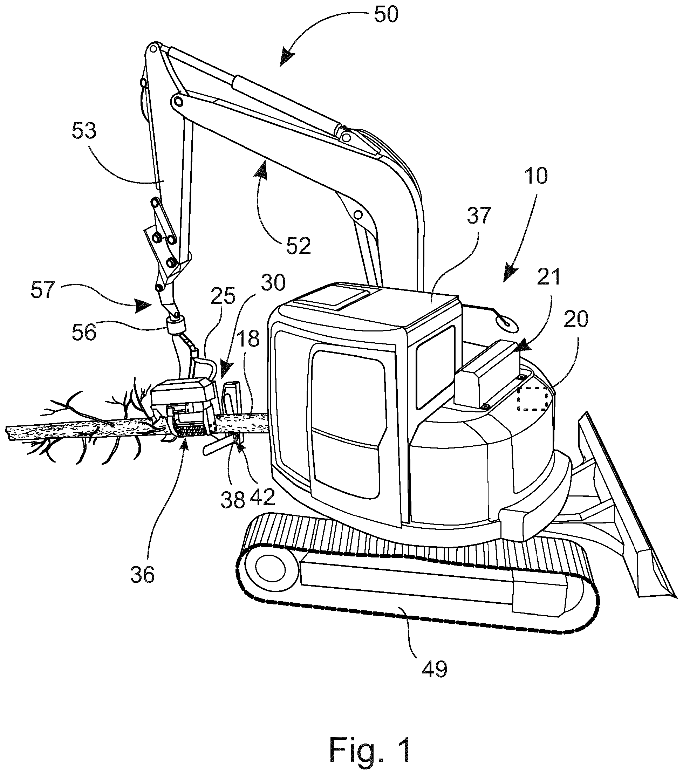

Figure 1 is an oblique front view of a basic example of a multi-process machine. Multi-process machines 31 generally include a work boom assembly 50 arranged on a base machine 10, here an excavator 50, comprising booms 52 and 53, wherein a log processing device , preferably a felling head 30, is fastened to the end of the last boom, here boom 53. The pivoting of the log processing device 30 to the boom 53 can be made, for example, according to prior art using two transverse rotary joints placed in a different direction relative to each other, more generally, a pivoted joint. In this case, this can also be termed a link 57. Between the log processing device 30 and the pivoted joint, there may be a rotating device 56, which is also commonly referred to as 'rotator'. The log processing device 30 can be rotated with the rotating device 56 without limits around the axis of rotation of the rotating device. The pressure medium flow required by the actuators (the saw motor 38, for example) of the log processing device 30 can be supplied via the work boom assembly 50 using hoses, more generally, pressure medium lines, from the pressure medium pump 11 of the base machine 10. The motorised base machine 10 includes a power aggregate and a cabin 37. The work boom assembly 50 is several metres long, which mainly determines the length of the pressure medium lines. The base machine 10 is equipped, for example, with wheels or crawler tracks 49, as in the figure. It can be said that the log processing device 30 includes an actuator unit 44 with its basic components including a cutting device 42, a feeding device 38 and delimbing blades serving as holding clamps.

The base machine can very well be a conventional frame-steered forest machine. For the purposes of this invention, the motor output of the base machine can be surprisingly low.

Recovery of energy is basically simple. However, reutilisation of this recovered energy must be performed accurately. Based on several experiments, the following arrangement was adopted.

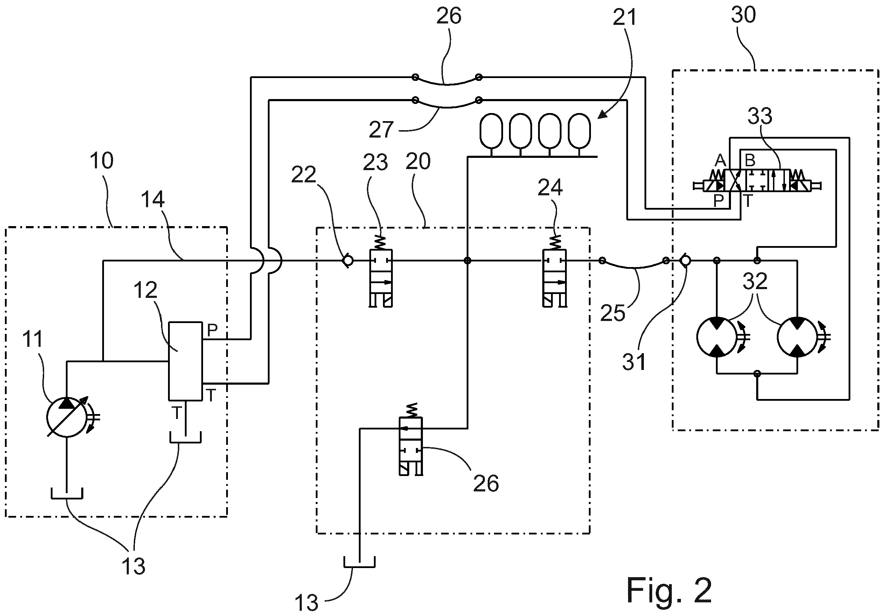

Figure 2 includes a simple hydraulic diagram for the entire machine comprising the felling head 30 and the base machine 10. The description only applies to the arrangement according to the invention and the rest of the machine's hydraulics has been excluded. Pressure accumulators, or the accumulator battery 21, are placed on the base machine 10. Hydraulic oil is taken for the accumulator battery 21 just before the dedicated valve assembly 12 of the base machine 10 or similar; that is, between the pump 11 and the dedicated valve assembly 12. Thus, the pressure level for the accumulators 21 is as high as possible. Naturally, the first actuator is a non-return valve 22 to prevent the return of reserved energy. The following element in the line 14 is a charging valve 23, which does not allow flow towards the accumulator. This charging valve is advantageously a proportional valve for a more accurate control of charging, i.e., a so-called variable flow control valve.

When the minimum pressure of the smallest accumulator of the accumulator battery 21 is about 110 bar, the accumulator battery only starts to charge when the system pressure level exceeds this value and the other conditions are met. Thus, the charging of the accumulator battery 21 can be steplessly controlled and even a so-called quick charging can be achieved. The accumulator battery 21 advantageously includes two or more accumulators with different pre-charge pressures. Based on experiments, a good solution is an accumulator battery 21 including, for example, 4 accumulators (generally 3 - 6) each with a different pre-charge pressure. The work pressure of the example machine is 250 bar. For example, the lowest pressure is 140 bar, then 150 bar and 160 bar, and the last one is 170 bar. In this way, discharging of accumulators takes place smoothly. When using one accumulator, harmful pressure pulses were detected when additional supply ended. A suitable total volume of accumulators 211 - 214 for an excavator weighing approximately 9,000 kg is about 15 litres ± 3 litres. The average pre-charge pressure of pressure accumulators is 40% - 60%, most preferably 45% - 55% of the work pressure. The pre-charge pressure range of pressure accumulators (211 - 214) is 8% - 16%, most preferably 10% - 14% of the work pressure.

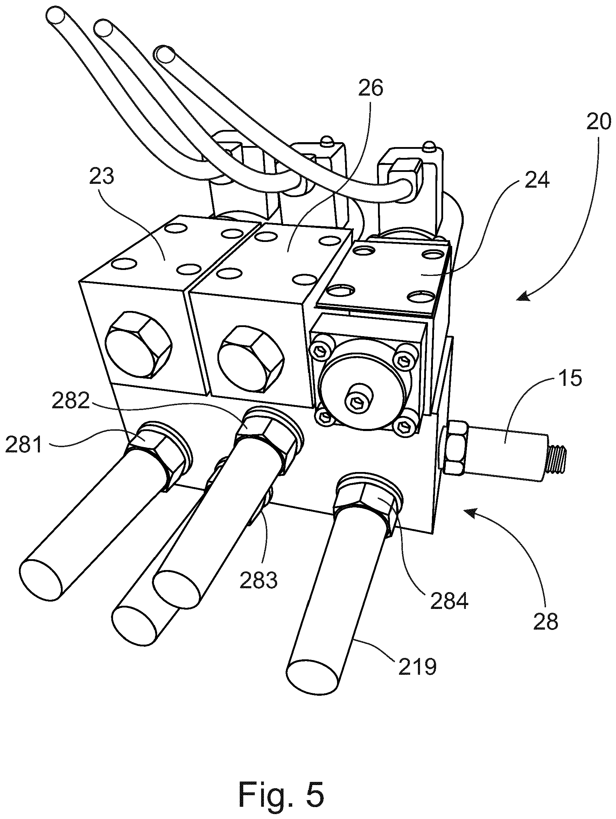

From the accumulator battery 21, oil is supplied with the valve 24 to the felling head 30 along a dedicated pipe 25. This valve 24 is in the same package 20 with the charging valve 23 and the discharge valve 26. The valve 24 can be an on/off valve (closed in de-energised state); that is, it does not need to be adjustable. According to Figure 5, the valves 23, 24 and 26 are installed on a common base plate 28 provided with connections 281 (charge), 282 (feeding), 283 (discharge) 284 (pressure accumulator battery). In addition, the necessary pressure sensor 15 is connected to the base plate 28.

If oil is supplied from the accumulator battery directly to the separate, dedicated pipe 25 leading to the felling head 30 on the base machine 10, harmful flows and impacts are generated in the dedicated valve assembly 12 of the base machine 10. For this reason, oil is supplied from the accumulator battery 21 directly to the felling head 30 using a separate, dedicated pipe 25. Naturally, emergency discharge of the accumulator battery 21 to the tank 13 is performed using the on/off valve 26 (open when de-energised) in the same unit 20, when it is desired to stop the operation.

In the felling head 30, hydraulic oil is led from the accumulator battery 21 via the non-return valve 31 directly to the forward direction drive line of the feeding hydraulic motors 32, here line B. In other words, oil cannot flow from the motor line towards the accumulator battery 21. In order that oil can enter the motor line, the dedicated supply valve 33 of the hydraulic motors 32 specific to the felling head 30 must be on. After the hydraulic motor 32, additional oil from the accumulator battery 21 returns to the tank 13 via the dedicated supply valve 33 of the felling head 30 along the dedicated tank line 27 of the felling head 30. Although this generates an asymmetric flow for the dedicated supply valve 33 of the felling head 30, it is not a practical problem with commercial valves.

This asymmetric flow, thus the entire flow including additional oil, is controlled by the felling head's 30 dedicated supply valve 33. In this way, all additional oil can be taken into use exactly at the right moment. Good controllability has been achieved in practical tests. In Figure 2, line B of the dedicated supply valve 33 is the forward direction drive.

In addition, the use of the accumulator battery 21 involves great safety risks. Additional oil of accumulators 21 can thus only be used to feed a log in the forward direction and additional pressurised oil only creates a risk in the boom pipework 25 during the forward feed direction. In addition, "false movements" can only appear in the forward feed direction and even then the dedicated supply valve 33 of the felling head 30 must be on.

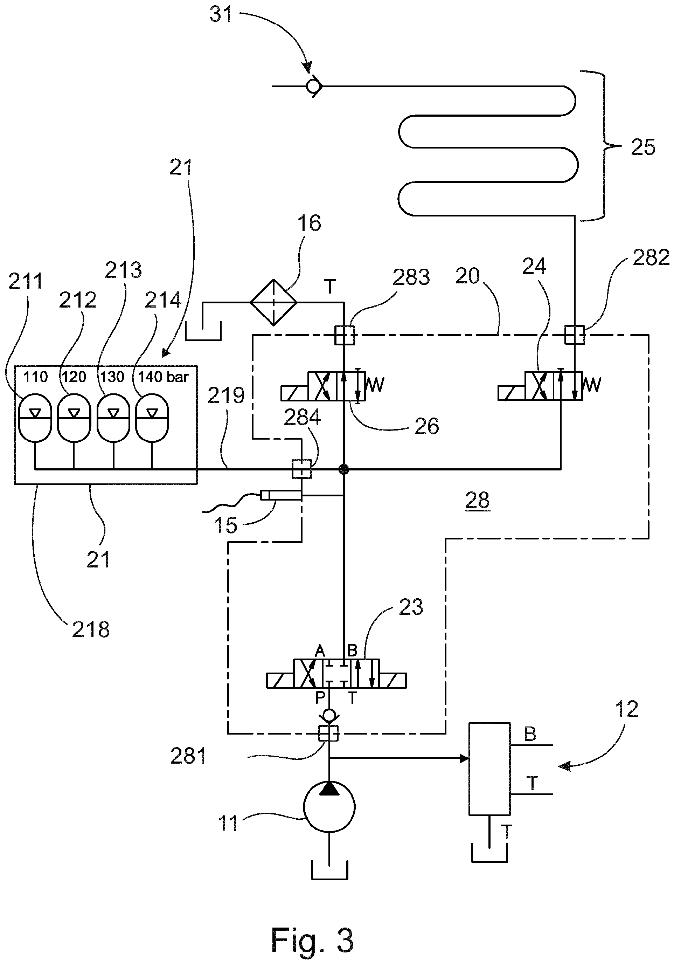

Figure 3 depicts the core of the hydraulic system in more detail. The central system 20 comprises a valve assembly installed on the base plate 28 (Figure 5). In terms of operation, the most essential components are the accumulator battery 21, the charging valve 26 and the discharge valve 24. Figure 3 shows a long separate pressure line, i.e. said dedicated line 25 leading from the base machine to the multi-process machine, generally a harvester.

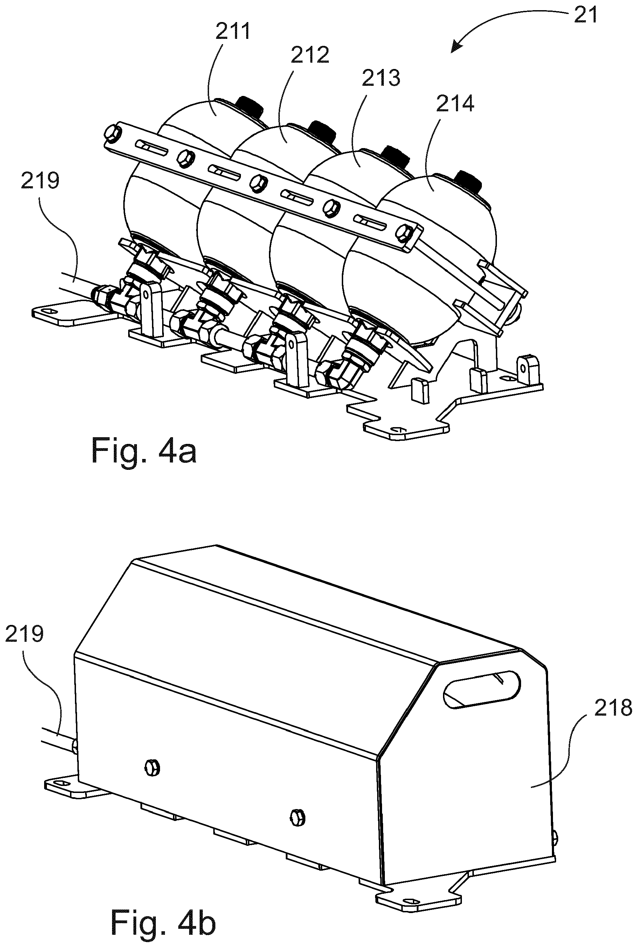

Separately implemented, the technical capability for the base machine is achieved in the system when it is equipped with said pressure accumulator system provided with a substantially straight and separate supply from the pump to the pressure accumulator. The accumulator battery of the system, or the pressure accumulator unit 21, is thus advantageously located on the base machine 10 or the boom assembly. In Figure 1, the pressure accumulators 211 - 214 of the accumulator battery 21 are assembled as a unit of their own in the casing 218, which is located at the rear of the cabin 37. The pressure accumulators are connected to a common pressure line 219. Figure 4b displays the casing 218 of the accumulator battery, which is also visible in Figure 1 at the rear of the cabin.

The felling head has a separate input with an auxiliary supply line led directly to the motors. The use of accumulators only requires quite simple logic control for implementing the above-described operations. The duration of the repeating cycle comprising sawing and log feeding operations is about two seconds, of which discharging takes place for 0.5 seconds during the log feeding step and accumulators are charged almost for the rest of this time.

This approximately 3 seconds long repeating cycle starts here by checking the saw readiness state.

| Operation | Duration [s] | Charge [%] | Discharge [%] |
|---|---|---|---|
| delay | 0.3 | 90 | 0 |
| flange down | 0.3 | 90 | 0 |
| sawing | 0.6 | 0 | 0 |
| flange up | 0.3 | 90 | 0 |
| delay | 0.3 | 90 | 0 |
| feeding mode, acceleration | 0.2 | 0 | 0 |
| feeding mode, full output | 0.7 | 0 | 100 |
| deceleration | 0.2 | 20 | 0 |

Delays existing between the sawing and feed motor operations can be fully utilised in charging. All base machine operations stop the charging.

In an advantageous multi-process machine, the output of the chainsaw 42 motor is 70% - 100% of the total output of the hydraulic motors 32 of the feeding device without the additional output of the pressure accumulator battery 21. The additional instantaneous output provided by the accumulator battery 21 to the hydraulic motors of the feeding device is 50% - 100%.

According to Figure 1, the base machine (10) can be an excavator weighing 7 - 10 tons. It is surprising that, with the invention, the motor output of an excavator or generally a base machine may be as low as 45 kW - 60 kW while still achieving a feed speed of 4 - 5 m/s.

## Claims

1. A hydraulic system for a multi-process machine, the multi-process machine including a base machine (10) , a boom assembly (50) comprising at least one boom (53), and a felling head (30) for felling and further processing trees, the felling head (30) being arranged to be suspended on said boom (53) via a joint (57), said felling head (30) including:
• a rotator (56) for rotating the felling head (30),
• a suspension device , its actuator unit and a frame for the felling head (30), including log (18) feeding device (38) complete with hydraulic motors (32), and
wherein the hydraulic system comprises:
• a hydraulic pump (11) on the base machine (10) ,
• a dedicated valve assembly (12) for supplying medium from the hydraulic pump (11) to the felling head (30),
• a hydraulic pressure line (26) and a return line (27) led from the dedicated valve assembly (12) of the base machine (10) to the felling head (30), comprising separate valve channels on the pressure (P) side and the tank (T) side,
• at least one said hydraulic motor (32) for operating the feed device (38),
• at least one pressure accumulator (21) placed in the system for increasing the instantaneous output with said motor (32), **characterised in that**
• a dedicated supply valve (33), a supply line (A/B) and a return line (B/A) are in the felling head (30), the dedicated supply valve (33) connected to said hydraulic pressure line (26) and the return line (27) and actuating the supply line (A/B) for feeding medium to said hydraulic motor (32) and the return line (B/A) for returning medium from the hydraulic motor (32)
• said pressure accumulators (21) are at least two (211 - 214), each arranged with a different pre-charge pressure,
• the hydraulic system includes a logic control for implementing pulse-operated use of the pressure accumalators mainly for sawing and log feeding including their auxiliary steps, and where the pressure accumulators are used only for improving log feeding, and the hydraulic system providing a direct feeding line from the accumulators to the said hydraulic motor, whereby the system further includes
• a first auxiliary supply line from the pump (11) to the pressure accumulators, a first end connected between the pump (11) and the dedicated valve assembly (12), and being a straight line comprising only a first control valve (23), and
• a second auxiliary supply line (25) as said direct feeding line led directly from the pressure accumulators (21) to the forward side of the hydraulic motor (32) and having a second control valve (24) for supplying the pressure of the accumulator (21) directly to the motor.

2. A hydraulic system for a multi-process machine according to Claim 1, **characterised in that** said pressure accumulators (21) are placed on the base machine (10) .

3. A hydraulic system for a multi-process machine according to Claim 1, **characterised in that** said pressure accumulators (21) are placed on the boom assembly (50).

4. A hydraulic system for a multi-process machine according to Claim 3, **characterised in that** the average pre-charge pressure of the accumulators is 40% - 60%, most preferably 45% - 55% of the work pressure.

5. A hydraulic system for a multi-process machine according to Claim 3 or 4, **characterised in that** the pre-charge pressure range of the accumulators (211 - 214) is 8% - 16%, most preferably 10% - 14% of the work pressure.

6. A hydraulic system for a multi-process machine according to any of Claims 1 - 5, **characterised in that** said control valve (23) of the first auxiliary supply line (14) is a so-called variable flow control valve or proportional valve for charging the pressure accumulator (21) with selected output.

7. A hydraulic system for a multi-process machine according to Claim 6, **characterised in that** the hydraulic system for the multi-process machine includes logic control for controlling the proportional control valve (24) with partial output in selected cycles.

8. A hydraulic system for a multi-process machine according to any of Claims 1 - 7, **characterised in that** the valve (23) of the first auxiliary supply line, the control valve (24) and a discharge valve (26) of the accumulator battery are placed on a common base plate (28) that includes the following connections: charge (281) from the pump, supply (282) to motors, discharge (283) to the tank (T), connection to the pressure accumulator battery (284).

9. A hydraulic system for a multi-process machine according to any of Claims 1 - 8, **characterised in that** said second auxiliary supply line (25) includes a one-way valve (31) for preventing escape of pressure towards the pressure accumulator (21).

10. A multi-process machine comprising a base machine (10 ), a boom assembly (50) equipped with at least one boom (53) and a felling head (30) for felling and further processing trees, the felling head (30) being suspended on said boom (53) via a joint (57), **characterised in that** the multi-process machine includes a hydraulic system according to any of Claims 1 - 9.

11. A multi-process machine according to Claim 10 wherein the felling head is provided with a chainsaw (42) driven by a hydraulic motor (38), **characterised in that** the motor output of the chainsaw is 70% - 100% of the output of the hydraulic motors (32) of the feeding device without additional output from pressure accumulators (21).

12. A multi-process machine according to Claim 10 or 11, **characterised in that** the base machine (10) is an excavator weighing 7 - 10 tons.

13. A multi-process machine according to any of Claims 10 - 12, **characterised in that** the motor output of the base machine is 80% - 120% of the rated output of the feed motors, i.e., without using the pressure accumulators.

## Patentansprüche

1. Hydraulisches System für eine Mehrzweck-Bearbeitungsmaschine, wobei die Mehrzweck-Bearbeitungsmaschine eine Basismaschine (10), eine Auslegeranordnung (50) mit mindestens einem Ausleger (53) und einen Fällkopf (30) zum Fällen und Weiterverarbeiten von Bäumen umfasst, wobei der Fällkopf (30) so angeordnet ist, dass er über ein Gelenk (57) an dem Ausleger (53) aufgehängt ist, wobei der Fällkopf (30) Folgendes umfasst:
• einen Rotator (56) zum Drehen des Fällkopfes (30),
• eine Aufhängungsvorrichtung, ihre Betätigungseinheit und einen Rahmen für den Fällkopf (30), einschließlich einer Vorrichtung (38) zum Zuführen von Baumstämmen (18), die mit Hydraulikmotoren (32) ausgestattet ist, und wobei das Hydrauliksystem Folgendes umfasst:
• eine Hydraulikpumpe (11) an der Basismaschine (10),
• eine spezielle Ventilanordnung (12) für die Zufuhr von Medium von der Hydraulikpumpe (11) zum Fällkopf (30),
• eine hydraulische Druckleitung (26) und eine Rücklaufleitung (27), die von der speziellen Ventilanordnung (12) der Basismaschine (10) zum Fällkopf (30) geführt werden, mit getrennten Ventilkanälen auf der Druckseite (P) und der Tankseite (T),
• mindestens einen Hydraulikmotor (32) zur Betätigung der Vorschubvorrichtung (38),
• mindestens einen Druckspeicher (21), der in dem System angeordnet ist, um die momentane Leistung des besagten Motors (32) zu erhöhen, **dadurch gekennzeichnet, dass**
• ein spezielles Versorgungsventil (33), eine Versorgungsleitung (A/B) und eine Rücklaufleitung (B/A) sich im Fällkopf (30) befinden, wobei das spezielle Versorgungsventil (33) mit der hydraulischen Druckleitung (26) und der Rücklaufleitung (27) verbunden ist und die Versorgungsleitung (A/B) zur Zuführung von Medium zum Hydraulikmotor (32) und die Rücklaufleitung (B/A) zur Rückführung von Medium vom Hydraulikmotor (32) betätigt,
• die besagten Druckspeicher (21) mindestens zwei (211 - 214) umfassen, die jeweils mit einem unterschiedlichen Vorfülldruck angeordnet sind,
• das Hydrauliksystem eine logische Steuerung zur Realisierung eines impulsgesteuerten Einsatzes der Druckspeicher hauptsächlich zum Sägen und zur Stammzuführung einschließlich ihrer Hilfsschritte umfasst, und wobei die Druckspeicher nur zur Verbesserung der Stammzuführung eingesetzt werden, und das Hydrauliksystem eine direkte Zuführungsleitung von den Speichern zu dem besagten Hydraulikmotor vorsieht, wobei das System ferner umfasst
• eine erste Hilfsversorgungsleitung von der Pumpe (11) zu den Druckspeichern führt, ein erstes Ende zwischen der Pumpe (11) und der speziellen Ventilanordnung (12) angeschlossen ist und eine direkte Leitung ist, die nur ein erstes Steuerventil (23) umfasst, und
• eine zweite Hilfsversorgungsleitung (25), die direkt von den besagten Druckspeichern (21) zur Vorderseite des Hydraulikmotors (32) führt und ein zweites Steuerventil (24) aufweist, um den Druck der Druckspeicher (21) direkt an den Motor zu liefern.

2. Hydraulisches System für eine Mehrzweck-Bearbeitungsmaschine gemäß dem Patentanspruch 1, **dadurch gekennzeichnet, dass** die Druckspeicher (21) auf der Basismaschine (10) angeordnet sind.

3. Hydraulisches System für eine Mehrzweck-Bearbeitungsmaschine gemäß dem Patentanspruch 1, **dadurch gekennzeichnet, dass** die besagten Druckspeicher (21) auf der Auslegeranordnung (50) angeordnet sind.

4. Hydraulisches System für eine Mehrzweck-Bearbeitungsmaschine gemäß dem Patentanspruch 3, **dadurch gekennzeichnet, dass** der durchschnittliche Vorfülldruck der Druckspeicher 40 % - 60 %, vorzugsweise 45 % - 55 % des Arbeitsdrucks beträgt.

5. Hydraulisches System für eine Mehrzweck-Bearbeitungsmaschine gemäß dem Patentanspruch 3 oder 4, **dadurch gekennzeichnet, dass** der Vorfülldruckbereich der Speicher (211 - 214) 8% - 16%, besonders bevorzugt 10% - 14% des Arbeitsdrucks beträgt.

6. Hydraulisches System für eine Mehrzweck-Bearbeitungsmaschine gemäß einem der Patentansprüche 1 - 5, **dadurch gekennzeichnet, dass** das Steuerventil (23) der ersten Hilfsversorgungsleitung (14) ein sogenanntes variables Durchflussregelventil oder Proportionalventil zum Füllen des Druckspeichers (21) mit gewählter Leistung ist.

7. Hydraulisches System für eine Mehrzweck-Bearbeitungsmaschine gemäß dem Patentanspruch 6, **dadurch gekennzeichnet, dass** das hydraulische System für die Mehrzweck-Bearbeitungsmaschine eine Logiksteuerung zur Steuerung des Proportionalregelventils (24) mit Teilleistung in ausgewählten Zyklen umfasst.

8. Hydraulisches System für eine Mehrzweck-Bearbeitungsmaschine gemäß einem der Patentansprüche 1 - 7, **dadurch gekennzeichnet, dass** das Ventil (23) der ersten Hilfsversorgungsleitung, das Steuerventil (24) und ein Auslassventil (26) der Druckspeicherbatterie auf einer gemeinsamen Grundplatte (28) angeordnet sind, die folgende Anschlüsse aufweist: Füllung (281) von der Pumpe, Zuführung (282) zu den Motoren, Auslass (283) zum Tank (T), Verbindung zur Druckspeicherbatterie (284).

9. Hydraulisches System für eine Mehrzweck-Bearbeitungsmaschine gemäß einem der Patentansprüche 1 - 8, **dadurch gekennzeichnet, dass** die besagte zweite Hilfsversorgungsleitung (25) ein Rückschlagventil (31) enthält, um ein Entweichen von Druck in Richtung des Druckspeichers (21) zu verhindern.

10. Mehrzweck-Bearbeitungsmaschine mit einer Basismaschine (10), einer Auslegeranordnung (50), die mit mindestens einem Ausleger (53) und einem Fällkopf (30) zum Fällen und Weiterverarbeiten von Bäumen ausgestattet ist, wobei der Fällkopf (30) über ein Gelenk (57) an dem besagten Ausleger (53) aufgehängt ist, **dadurch gekennzeichnet, dass** die Mehrzweck-Bearbeitungsmaschine ein Hydrauliksystem nach einem der Patentansprüche 1 - 9 aufweist.

11. Mehrzweck-Bearbeitungsmaschine gemäß Patentanspruch 10, wobei der Fällkopf mit einer von einem Hydraulikmotor (38) angetriebenen Kettensäge (42) versehen ist, **dadurch gekennzeichnet, dass** die Motorleistung der Kettensäge 70% - 100% der Leistung der Hydraulikmotoren (32) der Vorschubeinrichtung ohne zusätzliche Leistung von den Druckspeichern (21) beträgt.

12. Mehrzweck-Bearbeitungsmaschine gemäß dem Patentanspruch 10 oder 11, **dadurch gekennzeichnet, dass** die Basismaschine (10) ein 7 - 10 Tonnen schwerer Bagger ist.

13. Mehrzweck-Bearbeitungsmaschine gemäß einem der Patentansprüche 10 - 12, **dadurch gekennzeichnet, dass** die Motorleistung der Basismaschine 80% - 120% der Nennleistung der Vorschubmotoren beträgt, d.h. ohne Einsatz der Druckspeicher.

## Revendications

1. Un système hydraulique pour une abatteuse, l'abatteuse comprenant une machine de base (10), un ensemble flèche (50) comprenant au moins une flèche (53) et une tête d'abattage (30) pour l'abattage et le traitement ultérieur d'arbres, la tête d'abattage (30) étant agencée de sorte à être suspendue à ladite flèche (53) via une articulation (57), ladite tête d'abattage (30) comprenant :
• un rotateur (56) pour faire tourner la tête d'abattage (30),
• un dispositif de suspension, son unité d'actionneur et un cadre pour la tête d'abattage (30), comprenant un dispositif d'entraînement (38) de l'arbre (18) complet avec moteurs hydrauliques (32), et où le système hydraulique comprend :
• une pompe hydraulique (11) sur la machine de base (10),
• un ensemble soupape dédié (12) pour amener le milieu de la pompe hydraulique (11) à la tête d'abattage (30),
• une conduite hydraulique sous pression (26) et une conduite de retour (27) menée de l'ensemble soupape dédié (12) de la machine de base (10) à la tête d'abattage (30), comprenant des conduits de soupape séparés du côté pression (P) et du côté réservoir (T),
• au moins un dit moteur hydraulique (32) pour commander le dispositif d'entraînement (38),
• au moins un accumulateur de pression (21) placé dans le système pour augmenter la puissance instantanée avec ledit moteur (32), **caractérisé en ce que**
• une soupape d'alimentation dédiée (33), une conduite d'arrivée (A/B) et une conduite de retour (B/A) sont dans la tête d'abattage (30), la soupape d'alimentation dédiée (33) étant reliée à ladite conduite hydraulique sous pression (26) et la conduite de retour (27) et actionnant la conduite arrivée (A/B) pour amener le milieu audit moteur hydraulique (32) et la conduite de retour (B/A) pour ramener le milieu du moteur hydraulique (32)
• il y a au moins deux (211 à 214) dits accumulateurs de pression (21), chacun agencé avec une pression de précharge différente,
• le système hydraulique comprend une commande logique pour la mise en œuvre de l'utilisation pulsée des accumulateurs de pression principalement pour scier et entraîner l'arbre y compris les étapes auxiliaires, et où les accumulateurs de pression sont utilisées seulement pour améliorer l'entraînement de l'arbre, et le système hydraulique fournit une ligne d'alimentation directe des accumulateurs audit moteur hydraulique, et où le système comprend en outre
• une première conduite d'arrivée auxiliaire de la pompe (11) aux accumulateurs de pression, une première extrémité étant reliée entre la pompe (11) et l'ensemble soupape dédié (12), et étant une ligne directe comprenant seulement une première soupape de régulation (23), et
• une deuxième conduite d'arrivée auxiliaire (25) en tant que ladite ligne d'alimentation directe menée directement des accumulateurs de pression (21) au côté avant du moteur hydraulique (32) et ayant une deuxième soupape de régulation (24) pour amener la pression de l'accumulateur (21) directement au moteur.

2. Un système hydraulique pour une abatteuse selon la revendication 1, **caractérisé en ce que** lesdits accumulateurs de pression (21) sont placés sur la machine de base (10).

3. Un système hydraulique pour une abatteuse selon la revendication 1, **caractérisé en ce que** lesdits accumulateurs de pression (21) sont placés sur l'ensemble flèche (50).

4. Un système hydraulique pour une abatteuse selon la revendication 3, **caractérisé en ce que** la pression de précharge moyenne des accumulateurs est de 40 % à 60 %, idéalement de 45 % à 55 % de la pression de travail.

5. Un système hydraulique pour une abatteuse selon la revendication 3 ou 4, **caractérisé en ce que** l'intervalle de pression de précharge des accumulateurs (211 à 214) est de 8 % à 16 %, idéalement de 10 % à 14 % de la pression de travail.

6. Un système hydraulique pour une abatteuse selon l'une quelconque des revendications 1 à 5, **caractérisé en ce que** ladite soupape de régulation (23) de la première conduite d'arrivée auxiliaire (14) est une soupape appelée soupape de régulation de débit variable ou soupape proportionnelle pour charger l'accumulateur de pression (21) avec la puissance sélectionnée.

7. Un système hydraulique pour une abatteuse selon la revendication 6, **caractérisé en ce que** le système hydraulique pour l'abatteuse comprend une commande logique pour commander la soupape proportionnelle de régulation (24) avec une puissance partielle selon les cycles sélectionnés.

8. Un système hydraulique pour une abatteuse selon l'une quelconque des revendications 1 à 7, **caractérisé en ce que** la soupape (23) de la première conduite d'arrivée auxiliaire, la soupape de régulation (24) et une soupape de décharge (26) de la batterie d'accumulateurs sont placées sur une plaque de base commune (28) qui comprend les connexions suivantes : la charge (281) de la pompe, l'alimentation (282) aux moteurs, la décharge (283) vers le réservoir (T), la connexion à la batterie d'accumulateurs de pression (284).

9. Un système hydraulique pour une abatteuse selon l'une quelconque des revendications 1 à 8, **caractérisé en ce que** ladite deuxième conduite d'arrivée auxiliaire (25) comprend un clapet anti-retour (31) pour éviter une fuite de la pression vers l'accumulateur de pression (21).

10. Une abatteuse comprenant une machine de base (10), un ensemble flèche (50) équipé d'au moins une flèche (53) et une tête d'abattage (30) pour l'abattage et le traitement ultérieur d'arbres, la tête d'abattage (30) étant suspendue à ladite flèche (53) via une articulation (57), **caractérisé en ce que** l'abatteuse comprend un système hydraulique selon l'une quelconque des revendications 1 à 9.

11. Une abatteuse selon la revendication 10, où la tête d'abattage contient une scie à chaîne (42) entrainée par un moteur hydraulique (38), **caractérisé en ce que** la puissance du moteur de la scie à chaîne est de 70 % à 100 % de la puissance des moteurs hydrauliques (32) du dispositif d'entraînement sans la puissance additionnelle des accumulateurs de pression (21).

12. Une abatteuse selon la revendication 10 ou 11, **caractérisé en ce que** la machine de base (10) est un excavateur pesant 7 à 10 tonnes.

13. Une abatteuse selon l'une quelconque des revendications 10 à 12, **caractérisé en ce que** la puissance du moteur de la machine de base est de 80 % à 120 % de la puissance nominal des moteurs d'alimentation, c'est-à-dire sans l'utilisation des accumulateurs de pression.
